## Europäisches Patentamt

## European Patent Office

## Office européen des brevets

(19)

(11) Veröffentlichungsnummer: **0 163 015**
**B1**

(12) **EUROPÄISCHE PATENTSCHRIFT**

(45) Veröffentlichungstag der Patentschrift:
18.05.88

(51) Int. Cl.⁴: **B 60 T 15/22**

(21) Anmeldenummer: **85102434.9**

(22) Anmeldetag: **05.03.85**

(54) Anhänger-Steuerventil.

(30) Priorität: **01.06.84 DE 3420739**

(43) Veröffentlichungstag der Anmeldung:
**04.12.85 Patentblatt 85/49**

(45) Bekanntmachung des Hinweises auf die Patenterteilung:
**18.05.88 Patentblatt 88/20**

(84) Benannte Vertragsstaaten:
**AT CH DE FR GB IT LI NL SE**

(56) Entgegenhaltungen:
**EP-A-0 114 192**
**DE-A-2 520 692**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Schulz, Hans- Joachim, Gilborn 16, D-3002 Wedemark (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

**Beschreibung**

Die Erfindung betrifft ein Anhänger-Steuerventil für eine druckluftbetätigte Zweikreis-Zweileitungsbremsanlage gemäß dem Oberbegriff des Patentanspruchs 1 (entsprechend der DE-A-2 520 692, z. B.).

Bei Zweileitungs-Bremsanlagen besteht die Druckluftverbindung zwischen dem Motorfahrzeug und dem Anhänger aus einer Vorratsleitung und einer Bremsleitung. Die Bremsdrucksteuerung für die Bremsanlage des Anhängerfahrzeuges erfolgt über das Anhänger-Steuerventil, welches eine von einem Steuerkolben begrenzte Steuerkammer aufweist, die über einen ersten Steueranschluß an den ersten Bremskreis des Zugfahrzeuges anschließbar ist. Es ist ein Relaiskolben vorgesehen, welcher aus einem ersten Relaiskolbenteil und einem zweiten Relaiskolbenteil besteht, wobei die beiden Relaiskolbenteile hintereinandergeschaltet und fest miteinander verbunden sind. Das erste Relaiskolbenteil bildet mit einem Ventilkörper und zwei Ventilsitzen ein vom Steuerkolben betätigbares kombiniertes Einlaß- und Auslaßventil. Es ist eine Druckmitteleingangskammer vorgesehen, welche einerseits vom ersten Relaiskolbenteil und andererseits von einer zwischen den beiden Relaiskolbenteilen angeordneten Wand begrenzt wird und über einen ersten Vorratsanschluß an eine Vorratsleitung des Zugfahrzeuges anschließbar und über einen zweiten Vorratsanschluß mit der Anhänger-Vorratsleitung verbunden ist. Eine Druckmittelausgangskammer, welche einerseits vom Steuerkolben und andererseits vom ersten Relaiskolbenteil begrenzt wird und über einen Druckmittelausgang an die Anhänger-Bremsleitung angeschlossen ist, ist über das kombinierte Einlaß- und Auslaßventil mit der Druckmitteleingangskammer bzw. mit der Atmosphäre verbindbar. Eine zweite Steuerkammer, welche einerseits von der Wand und andererseits vom zweiten Relaiskolbenteil begrenzt wird, weist einen zweiten Steueranschluß auf, der an ein entlüftendes Handbremsventil oder eine Vorratsleitung des Zugfahrzeuges angeschlossen ist. Eine dritte Steuerkammer, die mittels des zweiten Relaiskolbenteiles von der zweiten Steuerkammer getrennt ist, ist über einen dritten Steueranschluß an den zweiten Bremskreis des Zugfahrzeuges angeschlossen.

Im normalen Betrieb strömt bei Betätigung des Motorwagen-Bremsventils Druckluft vom ersten Bremskreis über den ersten Steueranschluß in die erste Steuerkammer. Der sich in der Steuerkammer aufbauende Druck verschiebt den Steuerkolben in Richtung auf den Relaiskolben zu. Dabei setzt der mit dem Steuerkolben verbundene Ventilsitz auf den Ventilkörper des kombinierten Einlaß- und Auslaßventils auf. Das Auslaßventil ist jetzt geschlossen und das Einlaßventil gelangt bei der weiteren Abwärtsbewegung des Steuerkolbens in die Offenstellung. Die in der Druckmitteleingangskammer anstehende Druckluft gelangt durch das geöffnete Einlaßventil des kombinierten Einlaß- und Auslaßventils in die Druckmittelausgangskammer und weiter durch den Druckmittelausgang und die Anhänger-Bremsleitung zum Anhänger-Bremsventil. Der zweite Vorratsanschluß steht ständig mit dem ersten Vorratsanschluß in Verbindung. Über den zweiten Steueranschluß ist die zweite Steuerkammer mit dem Handbremsventil des Motorfahrzeuges verbunden. Der sich in der Druckmittelausgangskammer aufbauende Druck beaufschlagt die der ersten Steuerkammer abgewandte Seite des Steuerkolbens und bewegt diesen gegen die vom Druck in der ersten Steuerkammer auf den Steuerkolben einwirkende entgegengerichtete Kraft in Richtung auf die erste Steuerkammer zu. Das Einlaßventil gelangt in die Schließstellung und eine Abschlußstellung ist erreicht. Gleichzeitig mit den im vorstehenden beschriebenen Vorgängen erfolgt vom zweiten Bremskreis über den dritten Steueranschluß eine Belüftung der dritten Steuerkammer und somit eine Druckbeaufschlagung des zweiten Relaiskolbenteiles in Richtung auf die zweite Steuerkammer zu. Da jedoch die Kraft des in der Druckmittelausgangskammer anstehenden und das erste Relaiskolbenteil beaufschlagenden Druckes und die Kraft des in der zweiten Steuerkammer vom Handbremsventil anstehenden und das zweite Relaiskolbenteil beaufschlagenden Druckes überwiegen verändert sich die Lage des Relaiskolbens nicht.

Fällt durch einen Defekt der erste Bremskreis des Motorfahrzeuges aus, so verschiebt der in der dritten Steuerkammer aus dem zweiten Bremskreis anstehende Druck das zweite Relaiskolbenteil nach oben in Richtung auf die zweite Steuerkammer zu. Das über ein Kolbenrohr mit dem zweiten Relaiskolbenteil verbundene erste Relaiskolbenteil wird vom zweiten Relaiskolbenteil in Richtung auf die Druckmittelausgangskammer zu verschoben. Dabei gelangt das Einlaßventil in die Offenstellung. Ober den Druckmittelausgang wird Druckluft in die Anhänger-Bremsleitung eingesteuert. Voraussetzung für diese Funktion ist jedoch, daß die einander entgegengerichtet auf den Relaiskolben einwirkenden Kräfte (Vorratsdruck in der Druckmitteleingangskammer und Druck vom Handbremsventil in der zweiten Steuerkammer) sich im Gleichgewicht befinden.

Dadurch bedingt, daß bei Ausfall des ersten Bremskreises sowohl der über den ersten Vorratsanschluß in der Druckmitteleingangskammer anstehende Vorratsdruck als auch der über den dritten Steueranschluß in der dritten Steuerkammer anstehende Druck aus dem zweiten Bremskreis des Zugfahrzeuges auf die durch ein Mehrkreis-Schutzventil vorgegebenen Sicherheitsdrücke (Schließdrücke) abfallen, der über den zweiten Steueranschluß in der zweiten Steuerkammer anstehende Druck vom Handbremsventil jedoch konstant bleibt, befinden sich die einander entgegengerichtet auf das erste Relaiskolbenteil und das zweite Relaiskolbenteil einwirkenden Kräfte nicht mehr im Gleichgewicht.

Die Folge ist, daß die durch den Druck in der dritten Steuerkammer auf den Relaiskolben ausgeübte Kraft unter Umständen nicht ausreicht, um die entgegengerichtet auf den Relaiskolben einwirkende Kraft des Druckes aus der zweiten Steuerkammer zu überwinden. Das bedeutet, daß der Relaiskolben nicht in Öffnungsrichtung des Einlaßventils bewegt werden kann, so daß die Verbindung zwischen dem ersten Vorratsanschluß und dem mit der Anhänger-Bremsleitung verbundenen Ausgang nicht hergestellt werden kann.

Der Erfindung liegt deshalb die Aufgabe zugrunde, ein Anhänger-Steuerventil der eingangs genannten Art so zu verbessern, daß bei Ausfall des ersten Bremskreises des Zugfahrzeuges eine Versorgung der Anhänger-Bremsleitung mit Vorratsdruck sichergestellt wird.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

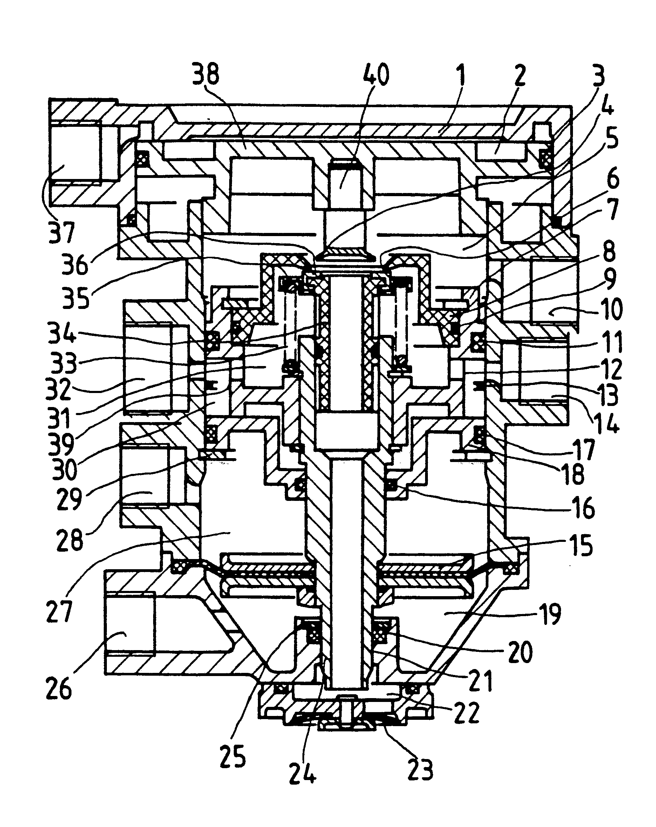

Die Erfindung bietet insbesondere den Vorteil, mit einfachen Mitteln auch bei Ausfall des ersten Bremskreises das Kräftegleichgewicht zwischen den auf den Relaiskolben einwirkenden Kräften aufrechtzuerhalten und so sicherzustellen, daß die vom Druck des zweiten Bremskreises in der dritten Steuerkammer auf das zweite Relaiskolbenteil ausgeübte Kraft ausreicht, um den Relaiskolben soweit in Öffnungsrichtung des kombinierten Einlaß- und Auslaßventils zu verschieben, daß das Einlaßventil in die Offenstellung gelangt und die Anhänger-Bremsleitung mit dem Vorratsdruck beaufschlagt wird. Die Funktion des Anhängersteuerventils (Öffnen und Schließen des kombinierten Einlaß- und Auslaßventils in Abhängigkeit vom Steuerdruck aus dem zweiten Bremskreis) bleibt erhalten. In vorteilhafter Weise ist ein Anschlag für die bewegliche Wand bzw. für ein mit der Wand zusammenwirkendes Teil vorgesehen, welcher verhindert, daß die Wand oder ein mit dieser zusammenwirkendes Teil vor den Durchlaßquerschnitt des Vorratsanschlusses gelangt und so die Druckmittelzufuhr zur Eingangskammer behindert. Anhand der Zeichnung wird nachstehend ein Ausführungsbeispiel der Erfindung näher erläutert.

Die Abbildung zeigt ein Anhänger-Steuerventil, bei welchem die zwischen der Druckmitteleingangskammer und der zweiten Steuerkammer angeordnete Wand abgedichtet verschiebbar angeordnet ist.

In einem Ventilgehäuse 1 ist ein Steuerkolben 38 angeordnet, welcher eine erste Steuerkammer 2 von einer Druckmittelausgangskammer 5 trennt. Die Steuerkammer 2 ist über einen ersten Steueranschluß 37 mit einem ersten Bremskreis des Motorfahrzeuges verbunden. Über einen Druckmittelausgang 10 steht die Druckmittelausgangskammer 5 mit einer zum Anhängerbremsventil eines Anhängerfahrzeuges führenden Anhänger-Bremsleitung in Verbindung. Der Steuerkolben 38 weist einen in Umfangsrichtung verlaufenden Dichtring 3 auf, welcher verhindert, daß Druckmittel von der Steuerkammer 2 in die Druckmittelausgangskammer 5 gelangt. Unterhalb des Steuerkolbens 38 ist ein aus einem ersten Relaiskolbenteil 7, 8 und einem zweiten Relaiskolbenteil 15 bestehender Relaiskolben angeordnet, wobei die beiden Relaiskolbenteile 7, 8 und 15 hintereinander geschaltet und fest miteinander verbunden sind. Ein auf der Umfangsfläche des ersten Relaiskolbenteiles 7, 8 angeordneter Dichtring 11 dichtet die Druckmittelausgangskammer 5 gegen eine gegenüberliegende, auf der anderen Seite des ersten Relaiskolbenteiles 7, 8 angeordnete Druckmitteleingangskammer 30 ab. Im ersten Relaiskolbenteil 7, 8 ist zentrisch eine Ausnehmung angeordnet, die im oberen Kolbenteil 8 des ersten Relaiskolbenteiles 7, 8 als Ventilsitz 6 ausgebildet ist. Im unteren Kolbenteil 7 des ersten Relaiskolbenteiles 7, 8 ist in der Ausnehmung ein abgestuftes Kolbenrohr 24 befestigt. Das freie Ende des Kolbenrohres 24 wird in einer Ausnehmung des Ventilgehäusebodens mittels eines Dichtringes 20 abgedichtet geführt. Im Kolbenrohr 24 ist ein mit einem Dichtring versehener, als Ventilglied 34 ausgebildeter zylindrischer Hohlkörper befestigt, der auf seiner dem Ventilsitz 6 zugewandten Seite ein Dichtelement 36 trägt. Das mit dem Dichtelement 36 versehene Ventilglied 34 bildet mit dem Ventilsitz 6 ein Einlaßventil 34, 36, 6, über welches die Druckmitteleingangs kammer 30 mit der Druckmittelausgangskammer 5 verbindbar ist. Eine sich an einem Anschlag des Kolbenrohres 24 abstützende Druckfeder 33 beaufschlagt einen am Ventilglied 34 angeordneten Federteller 35 und hält so das mit dem Dichtelement 36 versehene Ventilglied auf dem Ventilsitz 6 des Einlaßventils 6, 34, 36. An der der Druckmittelausgangskammer 5 zugewandten Seite des Steuerkolbens 38 ist koaxial zu dem Ventilglied 34 ein Stößel 40 angeordnet, welcher an seinem dem Ventilglied 34 zugewandten Ende einen Dichtkörper 4 trägt. Der mit dem Dichtkörper 4 versehene Stößel 40 bildet mit dem das Dichtelement 36 tragenden Ventilglied 34 ein Auslaßventil 40, 4, 34, 36, über welches die Druckmittelausgangskammer 5 mit der Atmosphäre verbindbar ist. Das Einlaßventil 6, 34, 36 und das Auslaßventil 40, 4, 34, 36 bilden zusammen ein kombiniertes Einlaß- und Auslaßventil, welches vom Steuerkolben 38 betätigbar ist. Das freie Ende des Kolbenrohres 24 ragt in eine Entlüftungskammer 22, welche von einem zur Atmosphäre hin in die Offenstellung bringbaren Rückschlagventil 23 verschlossen wird. Zwischen den beiden Relaiskolbenteilen 7, 8 und 15 ist eine Wand 18 mittels eines Dichtringes 17 gegen die Gehäusewand und mittels eines Dichtringes 16 gegen das Kolbenrohr 24 auf dem Kolbenrohr 24 relativ zu den beiden Relaiskolbenteilen 7, 8, 15 verschiebbar angeordnet. Das zweite Relaiskolbenteil 15 trennt eine zweite Steuerkammer 27 von einer dritten Steuerkammer 19. Die dritte Steuerkammer 19 wird von der der Wand 18 abgewandten Seite des zweiten Relaiskolbenteiles 15 begrenzt und die zweite Steuerkammer 27 wird von der der Wand 18 zugewandten Seite des zweiten Relaiskolbenteiles 15 begrenzt. Das zweite Relaiskolbenteil 15 ist als Membrankolben ausgebildet, der mit seinem äußeren Randbereich in der Gehäusewandung befestigt und mit seinem verstärkten Mittelteil mit dem Kolbenrohr 24 verbunden ist. Die Druckmitteleingangskammer 30 verbindet einerseits den ersten Vorratsanschluß 32 mit einem zweiten Vorratsanschluß 14 und ist andererseits über im ersten Relaiskolbenteil 7, 8 vorgesehene Ausnehmungen 12, 39 mit einem das kombinierte Einlaß- und Auslaßventil aufnehmenden Raum 31 des ersten Relaiskolbenteiles 7, 8 verbunden. Der erste Vorratsanschluß 32 ist an eine Vorratsleitung des Zugfahrzeuges und der zweite Vorratsanschluß 14 ist an die Anhänger-Vorratsleitung anschließbar. Über einen dritten Steueranschluß 26 ist die dritte Steuerkammer 19 mit einem zweiten Bremskreis des Motorfahrzeuges verbunden. Die zweite Steuerkammer 27 ist über einen zweiten Steueranschluß 28 an ein als Handbremsventil ausgebildetes entlüftendes Steuerventil oder eine Vorratsleitung des Zugfahrzeuges anschließbar. Ein im Bereich der zweiten Steuerkammer 27 in der Gehäusewandung angeordneter Anschlag 29 begrenzt den Hub der als Kolben dienenden Wand 18 in Richtung auf die zweite Steuerkammer 27 zu. Ein weiterer Anschlag 13, der im Bereich des ersten Vorratsanschlusses 32 und des zweiten Vorratsanschlusses 14 zwischen dem ersten Relaiskolbenteil 7, 8 und der Wand 18 vorgesehen ist, verhindert, daß bei einem Hub der Wand 18 in Richtung auf die Eingangskammer 30 zu die Wand 18 oder ein mit der Wand 18 zusammenwirkendes Teil den Durchlaßquerschnitt der Vorratsanschlüsse 32, 14 verändert.

Die Funktion des im vorstehenden beschriebenen Anhängersteuerventils wird nachfolgend näher erläutert.

Bei Betätigung des Motorwagenbremsventils strömt Druckluft vom ersten Bremskreis über den ersten Steueranschluß 37 in die erste Steuerkammer 2. Der sich in der Steuerkammer 2 aufbauende Druck verschiebt den Steuerkolben 38 in Richtung auf den Relaiskolben 7, 8 zu.

Dabei setzt das mit dem Stößel 40 verbundene Dichtelement 4 auf das Ventilglied 34 auf. Das Auslaßventil 40, 34, 36, 4 ist jetzt geschlossen und das Einlaßventil 6, 36, 34 gelangt bei der weiteren Abwärtsbewegung des Steuerkolbens 38 in die Offenstellung. Die in der Druckmitteleingangskammer 30 sowie im Raum 31 anstehende Druckluft gelangt durch das geöffnete Einlaßventil 6, 34, 36 des kombinierten Einlaß- und Auslaßventils 6, 34, 36, 4 in die Druckmittelausgangskammer 5 und weiter durch den Druckmittelausgang 10 und die Anhänger-Bremsleitung zum hier nicht gezeigten Anhänger-Bremsventil. Über die Eingangskammer 30 steht der erste Vorratsanschluß 32 mit dem zweiten Vorratsanschluß 14 ständig in Verbindung. Über den zweiten Steueranschluß 28 ist die zweite Steuerkammer 27 mit dem Handbremsventil des Motorfahrzeuges verbunden. Die Kraft des Druckes in der zweiten Steuerkammer 27 überwiegt aufgrund der unterschiedlichen Wirkflächen des ersten Relaiskolbenteiles 7, 8 und des zweiten Relaiskolbenteiles 15 in Richtung auf die dritte Steuerkammer 19 zu und hält so das erste Relaiskolbenteil 7, 8 und die Wand 18 auf dem Anschlag 29. Der sich in der Druckmittelausgangskammer 5 aufbauende Druck beaufschlagt die der ersten Steuerkammer 2 abgewandte Seite des Steuerkolbens 38 und bewegt diesen gegen die vom Druck in der ersten Steuerkammer 2 auf den Steuerkolben 38 einwirkende entgegengerichtete Kraft in Richtung auf die erste Steuerkammer 2 zu. Das Einlaßventil 6, 34, 36 gelangt in die Schließstellung und eine Abschlußstellung ist erreicht. Gleichzeitig mit den im vorstehenden beschriebenen Vorgängen erfolgt vom zweiten Bremskreis über den dritten Steueranschluß 26 eine Belüftung der dritten Steuerkammer 19 und somit eine Druckbeaufschlagung des zweiten Relaiskolbenteiles 15 in Richtung auf die zweite Steuerkammer 27 zu. Da sich jedoch in der Druckmittelausgangskammer 5 ein das erste Relaiskolbenteil 7, 8 beaufschlagender Druck aufbaut, dessen Kraft der entgegengerichtet auf den Relaiskolben 7, 8, 15 einwirkenden Kraft des Druckes aus der dritten Steuerkammer 19 entgegenwirkt, verändert sich die Lage des Relaiskolbens 7, 8, 15 nicht.

Fällt durch einen Defekt der erste Bremskreis des Motorfahrzeuges aus, so sinkt der Druck in der Druckmitteleingangskammer 30 und in der dritten Steuerkammer 19 auf den durch das Mehrkreis-Schutzventil vorgegebenen Sicherheitsdruck ab. Der Druck in der dritten Steuerkammer 27 hält die Wand 18 mit dem ersten Relaiskolbenteil 7, 8 in Kontakt, da dieser Druck jetzt höher ist als der Druck in der Druckmitteleingangskammer 30. Dadurch wird das Kräftegleichgewicht zwischen den auf den Relaiskolben 7, 8, 15 einwirkenden Kräften aufrechterhalten. Durch diese Maßnahme tritt keine das zweite Relaiskolbenteil 15 in Richtung auf die dritte Steuerkammer 19 zu belastende Kraft in der zweiten Steuerkammer 27 mehr auf, so daß der Druck in der dritten Steuerkammer 19 ausreicht, um den Relaiskolben 7, 8, 15 in Öffnungsrichtung des kombinierten Einlaß- und Auslaßventils 6, 34, 36, 4 zu verschieben und so die Funktion des Anhänger-Steuerventils aufrechtzuerhalten.

Um zu verhindern, daß bei diesem Vorgang die Wand 18 oder ein mit der Wand 18 zusammenwirkendes Teil den Öffnungsquerschnitt des ersten Vorratsanschlusses 32 bzw. des zweiten Vorratsanschlusses 14 überfährt und diesen dabei verringert, sind die beiden Vorratsanschlüsse 32 und 14 so angeordnet, daß sie außerhalb des Hubbereiches der Wand 18 bzw. eines mit der Wand 18 zusammenwirkenden Teiles liegen.

Es ist auch denkbar, z. B. als Anschlag 13 ausgebildete Mittel vorzusehen, die den Hub der Wand 18 bzw. den Hub eines mit der Wand 18 zusammenwirkenden Teiles in Richtung auf die Vorratsanschlüsse zu begrenzen. Eine Veränderung des Durchlaßquerschnittes der Vorratsanschlüsse 32, 14 kann auch dadurch verhindert werden, daß der Hub des Relaiskolbens 7, 8, 15 mittels Anschlägen begrenzt wird.

**Patentansprüche**

1. Anhänger-Steuerventil für eine druckluftbetätigte Zweikreis-Zweileitungsbremsanlage mit einer zwischen dem Zugfahrzeug und dem Anhängerfahrzeug angeordneten Anhänger-Vorratsleitung und mit einer ebenfalls zwischen dem Zugfahrzeug und dem Anhängerfahrzeug angeordneten Anhänger-Bremsleitung mit folgenden Merkmalen:

a) es ist eine erste von einem Steuerkolben (38) begrenzte Steuerkammer (2) vorgesehen, die über einen ersten Steueranschluß (37) an den ersten Bremskreis des Zugfahrzeuges anschließbar ist;

b) es ist ein Relaiskolben vorgesehen, welcher aus einem ersten Relaiskolbenteil (7, 8) und einem zweiten Relaiskolbenteil (15) besteht, wobei die beiden Relaiskolbenteile (7, 8, 15) hintereinandergeschaltet und fest miteinander verbunden sind;

c) das erste Relaiskolbenteil (7, 8) weist einen ersten Ventilsitz (6) auf und bildet mit einem Ventilkörper (34) und einem zweiten Ventilsitz (4) ein vom Steuerkolben (38) betätigbares kombiniertes Einlaß- und Auslaßventil (6, 34, 36, 4) für die Anhänger-Bremsleitung;

d) es ist eine Druckmitteleingangskammer (30) vorgesehen, welche einerseits vom ersten Relaiskolbenteil (7, 8) und andererseits von einer zwischen den beiden Relaiskolbenteilen (7, 8, 15) angeordneten Wand (18) begrenzt wird und über einen Vorratsanschluß (32) an eine Vorratsleitung des Zugfahrzeuges anschließbar ist;

e) es ist eine Druckmittelausgangskammer (5) vorgesehen, welche einerseits vom Steuerkolben (38) und andererseits vom ersten Relaiskolbenteil (7, 8) begrenzt wird und über einen Druckmittelausgang (10) an die Anhänger-Bremsleitung anschließbar ist;

f) die Druckmittelausgangskammer (5) ist über das kombinierte Einlaß- und Auslaßventil (6, 34, 36, 4) wahlweise mit der Druckmitteleingangskammer (30) oder mit der Atmosphäre verbindbar;

g) es ist eine zweite Steuerkammer (27) vorgesehen, welche einerseits von der Wand (18) und andererseits vom zweiten Relaiskolbenteil (15) begrenzt wird und über einen zweiten Steueranschluß (28) an ein entlüftendes Steuerventil für einen Hilfsbremskreis des Zugfanrzeuges anschließbar ist;

h) es ist eine dritte Steuerkammer (19) vorgesehen, welche von der der zweiten Steuerkammer (27) abgewandten Seite des zweiten Relaiskolbenteiles (15) begrenzt wird und über einen dritten Steueranschluß (26) an einen zweiten Bremskreis des Zugfahrzeuges anschließbar ist;

gekennzeichnet durch die folgenden Merkmale:

i) die Wand (18) ist relativ zu den beiden Relaiskolbenteilen (7, 8, 15) abgedichtet verschiebbar angeordnet;

k) es sind Mittel vorgesehen, welche den Hub der Wand (18) in Richtung auf die Druckmitteleingangskammer (30) zu begrenzen, derart, daß der Durchlaßquerschnitt des Vorratsanschlusses (32) nicht von der Wand (18) oder einem mit der Wand (18) zusammenwirkenden Teil verändert wird, und/oder der Vorratsanschluß (32) ist so angeordnet, daß sein Durchlaßquerschnitt von der Wand (18) nicht verändert wird.

2. Anhänger-Steuerventil nach Anspruch 1, dadurch gekennzeichnet, daß in dem Bereich der Druckmitteleingangskammer (30), welcher zwischen dem Durchlaßquerschnitt des Vorratsanschlusses (32) und der Wand (18) gelegen ist ein Anschlag (13) vorgesehen ist.

3. Anhänger-Steuerventil nach Anspruch 1, dadurch gekennzeichnet, daß im Bereich der Ausgangskammer (5) ein Anschlag für den Relaiskolben (7, 8, 15) angeordnet ist, derart, daß bei einem durch die Wand (18) bewirkten Hub des Relaiskolbens (7, 8, 15) in Richtung auf die Ausgangskammer (5) zu der Hub des Relaiskolbens (7, 8, 15) und der mit dem Relaiskolben (7, 8, 15) zusammenwirkenden Wand (18) begrenzt wird.

**Claims**

1. Trailer control valve for a pneumatic dual-circuit/two-line braking system having a trailer supply line arranged between the towing vehicle and the trailer vehicle and having a trailer brake line likewise arranged between the towing vehicle and the trailer vehicle, having the following features:

a) a first control chamber (2) bounded by a control piston (38) is provided which can be connected by way of a first control connection (37) to the first braking circuit of the towing vehicle;

b) a relay piston is provided which consists of a first relay piston component (7, 8) and a second relay piston component (15), the two components (7, 8, 15) of the relay piston being filly connected together, one beside the other;

c) the first relay piston component (7, 8) has a first valve seat (6) and, with a valve member (34) and a second valve seat (4) forms a combined inlet and outlet valve (6, 34, 36, 4), actuable by the control piston (38), for the trailer brake line;

d) a pressure-medium inlet chamber (30) is provided which is bounded on one side by the first relay piston component (7, 8) and on the other side by a wall (18) arranged between the two relay piston components (7, 8, 15) and which can be connected by way of a supply connection (32) to a supply line of the towing vehicle;

e) a pressure-medium outlet chamber (5) is provided which is bounded on one side by the control piston (38) and on the other side by the first relay piston component (7, 8) and which can be connected by way of a pressure-medium outlet (10) to the trailer brake line;

f) the pressure-medium outlet chamber (5) can be connected by way of the combined inlet and outlet valve (6, 34, 36, 4) either to the pressure-medium inlet chamber (30) or to the atmosphere;

g) a second control chamber (27) is provided which is bounded on one side by the wall (18) and on the other side by the second relay piston component (15) and which can be connected by way of a second control connection (28) to a venting control valve for an auxiliary braking circuit of the towing vehicle;

h) a third control chamber (19) is provided which is bounded by the side of the second relay piston component (15) remote from the second control chamber (27) and which can be connected by way of a third control connection (26) to a second braking circuit of the towing vehicle;

characterised by the following features:

i) the wall (18) is arranged in such a manner that it can be displaced in a sealed manner relative to the two relay piston components (7, 8, 15);

k) means are provided which limit the movement of the wall (18) in the direction towards the pressure-medium inlet chamber (30) in such a manner that the opening in the supply connection (32) is not changed by the wall (18) or by a component cooperating with the wall (18), and/or the supply connection (32) is arranged in such a manner that its opening is not changed by the wall (18).

2. Trailer control valve according to claim 1, characterised in that a stop (13) is provided in the region of the pressure-medium inlet chamber (30) which is located between the opening in the supply connection (32) and the wall (18).

3. Trailer control valve according to claim 1, characterised in that a stop for the relay piston (7, 8, 15) is arranged in the region of the outlet chamber (5) in such a manner that in the event of a stroke of the relay piston (7, 8, 15), effected by the wall (18), in the direction towards the outlet chamber (5), the stroke of the relay piston (7, 8, 15) and the movement of the wall (18) cooperating with the relay piston (7, 8, 15) are limited.

**Revendications**

1. Soupape de commande de remorque pour une installation de freinage à air comprimé à deux circuits-deux conduites, comprenant une conduite d'alimentation de remorque, interposée entre le véhicule tracteur et le véhicule remorqué, et comprenant une conduite de freinage de remorque également interposée entre le véhicule tracteur et le véhicule remorqué, cette soupape présentant les particularités suivantes,

a) il est prévu une première chambre de commande (2) délimitée par un piston de commande (38), et qui peut être reliée au premier circuit de freinage du véhicule tracteur par un premier raccord de commande (37);

b) il est prévu un piston de relais qui est composé d'une première partie de piston de relais (7, 8) et d'une deuxième partie de piston de relais (15), les deux parties (7, 8, 15) du piston de relais étant disposées l'une à la suite de l'autre et étant reliées solidairement l'une à l'autre;

c) la première partie (7, 8) du piston de relais présente un premier siège de soupape (6) et forme, avec un élément mobile de soupape (34) et un deuxième siège de soupape (4), une soupape combinée d'admission et d'échappement (6, 34, 36, 4) pouvant être actionnée par le piston de commande (38), et qui commande la conduite de freinage de la remorque;

d) il est prévu une chambre d'entrée de fluide de pression (30) qui est délimitée, d'une part, par la première partie (7, 8) du piston de relais et, d'autre part, par une cloison (18) disposée entre les deux parties (7, 8, 15) du piston de relais, et qui peut être raccordée à une conduite d'alimentation du véhicule tracteur par un raccord d'alimentation (32);

e) il est prévu une chambre de sortie de fluide de pression (5) qui est délimitée, d'une part, par le piston de commande (38) et, d'autre part, par la première partie (7, 8) du piston de relais, et qui peut être reliée à la conduite de freinage de la remorque par une sortie de fluide de pression (10);

f) la chambre de sortie de fluide de pression (5) peut être reliée sélectivement à la chambre d'entrée de fluide de pression (30) ou à l'atmosphère par la soupape combinée d'admission et d'échappement (6, 34, 36, 4);

g) il est prévu une deuxième chambre de commande (27) qui est délimitée, d'une part, par la cloison (18) et, d'autre part, par la deuxième partie (15) du piston de relais, et qui peut être raccordée, par un deuxième raccord de commande (28), à une soupape de commande de mise à l'air libre prévue pour un circuit de freinage auxiliaire du véhicule tracteur;

h) il est prévu une troisième chambre de commande (19) qui est délimitée par la face de la deuxième partie (15) du piston de relais qui est à l'opposé de la deuxième chambre de commande (27) et qui peut être raccordée à un deuxième circuit de freinage du véhicule tracteur par l'intermédiaire d'un troisème raccord de commande (26);

caractérisée par les caractéristiques suivantes:

i) la cloison (18) est montée pour pouvoir coulisser à joint étanche par rapport aux deux parties (7, 8, 15) du piston de relais;

k) il est prévu des moyens qui limitent la course de la cloison (18) en direction de la chambre d'entrée du fluide de pression (30), de telle manière que la section de passage du raccord d'alimentation (32) ne soit pas modifiée par la cloison (18) ou par une pièce coopérant avec la cloison (18), et/ou le raccord d'alimentation (32) est disposé de telle manière que sa section de passage ne soit pas modifiée par la cloison (18).

2. Soupape de commande selon la revendication 1, caractérisée en ce qu'il est prévu une butée (13) dans la région de la chambre d'entrée de fluide de pression (30) qui est située entre la section de passage du raccord d'alimentation (32) et la cloison (18).

3. Soupape de commande de remorque selon la revendication 1, caractérisée en ce qu'une butée destinée à arrêter le piston de relais (7, 8, 15) est agencée dans la région de la chambre de sortie (5) de telle manière que, en présence d'une course du piston de relais (7, 8, 15) en direction de la chambre de sortie (5) qui est provoquée par la cloison (18), la course du piston de relais (7, 8, 15) et de la cloison (18) coopérant avec le piston de relais (7, 8, 15) soit limitée.